Europäisches Patentamt

European Patent Office

Office européen des brevets

(19)

(11) Publication number: **0 348 058**

**A2**

(12) **EUROPEAN PATENT APPLICATION**

(21) Application number: **89305617.6**

(22) Date of filing: **02.06.89**

(51) Int. Cl.⁴: **F16K 11/065 , F16K 31/42**

(30) Priority: **21.06.88 US 219662**

(43) Date of publication of application:
**27.12.89 Bulletin 89/52**

(84) Designated Contracting States:
**DE FR GB IT**

(71) Applicant: **PARKER HANNIFIN CORPORATION**
**17325 Euclid Avenue**
**Cleveland Ohio 44112(US)**

(72) Inventor: **Johnson, J. Les**
**Route 1 P O Box 437**
**Morrisville, NC 27560(US)**
Inventor: **Hanning, John R.**
**3505 Casine Court**
**Wake Forest, NC 27587(US)**

(74) Representative: **Purvis, William Michael**
**Cameron et al**
**D. Young & Co. 10 Staple Inn**
**London WC1V 7RD(GB)**

(54) **Fluid directing valve.**

(57) A low restriction fluid control valve has a body
(12) including a first inlet opening (36) and first and
second outlet openings (38, 40). The valve body (12)
has an internal cavity (24) and a rectangular slide
(50) having a circular aperture (52) therein is mov-
able in the cavity (24). Movement of the slide (50)
places the outlet openings (38, 40) of the valve
selectively in fluid communication with the inlet
opening (36) through the circular aperture (52) of the
slide with low restriction to fluid flow.

FIG. 2

EP 0 348 058 A2

Xerox Copy Centre

# FLUID DIRECTING VALVE

The invention relates to valves used to direct the flow of fluids and particularly to valves which direct fluid from an inlet port to a selected outlet port and which pass fluid through the valve with a low flow resistance.

Several fluid control valves have been previously proposed with low flow resistance. Patent specification DE-A-1,213,187 discloses a valve with a movable internal slide. The slide is connected on one side to a flexible hose. The opposite side of the slide is adjacent outlet ports in the valve body. Fluid passes from the hose through the slide. By shifting the position of the slide, fluid is selectively delivered to the outlet ports. The slide is spring loaded against the outlet ports to avoid fluid loss. A polished metal insert is used to facilitate movement of the slide across the outlet ports and to avoid excessive wear. A drawback associated with this design is that the slide must be spring loaded which necessitates the use of considerable force to shift the slide. The actuator portion of the valve which moves the slide must therefore be operated at high pressure or must be sufficiently large to produce the required force at low pressure.

Patent specification DE-A 1,288,389 also discloses a valve having an internal slide. The slide is housed within the valve body and is moved between locations inside the valve to direct fluid to selected outlet ports. The slide must be highly polished and in close tolerance with the interior of the valve body to achieve sealing and avoid fluid loss. This valve construction poses significant resistance to flow and would be expensive to produce.

Patent specification US-A-4,526,202 discloses a low resistance valve which includes an internal sliding member. The member is connected to a flexible hose inside the valve body. Fluid enters the valve and is directed through the flexible hose and slide portions to an outlet port. An alternative form of the valve employs a seal between the sliding member and the outlet port to minimize fluid loss. It is expected that a valve made in accordance with this design would pose reliability problems due to the use of an internal flexible hose member.

Two designs for low restriction fluid control valves are disclosed in patent specification US-A-4,458,238. A first of the designs uses a rotatable rocker member to direct fluid from an inlet port to a selected outlet port. Due to the rotatable nature of the rocker member, it would be difficult to avoid fluid loss inside the valve. A second of the designs employs a slider member which moves longitudinally to direct fluid to selected output ports. The slider member is spring loaded or made in very close tolerance with the cavity in which it is housed to avoid fluid losses. This valve would require high force to shift the sliding member and would be expensive to produce.

According to one aspect of the invention there is provided a low restriction fluid directing valve selectively to deliver fluid between ports of the valve, comprising:

a) a body with a first inlet port and a first outlet port;

b) a cavity within the body and including first and second opposed planar walls;

c) a first inlet opening in the first planar wall in fluid communication with the first inlet port;

d) a first outlet opening in the second planar wall in fluid communication with the first outlet port;

e) a slide mounted for movement in the cavity and incorporating an aperture extending through the slide, whereby, when the slide is in a first location in the cavity, the first inlet and the first outlet openings are in communication through the aperture;

f) sealing means to seal the aperture and the first inlet and the first outlet openings in fluid tight relationship, the sealing means including at least one first resilient sealing surface in contact with at least one of the planar walls, and force application means to apply a sealing force to the sealing surface responsive to fluid pressure in the aperture; and

g) movement means to move the slide between the first location and a second location in the cavity, wherein the first inlet opening and the first outlet opening are not in fluid communication; whereby moving the slide between the first and second locations selectively enables fluid to be delivered from the first inlet port to the first outlet port.

According to another aspect of the invention there is provided a low restriction fluid directing valve selectively to deliver fluid between ports of the valve, comprising:

a) a body including a first inlet port, a first outlet port and a second outlet port;

b) a cavity within the body and having opposed first and second planar walls;

c) a first inlet opening in the first planar wall in fluid communication with the first inlet port;

d) a first outlet opening in the second planar wall in fluid communication with the first outlet port;

e) a second outlet opening in the second planar wall spaced from the first outlet opening, the second outlet opening being in fluid communication with the second outlet port;

f) a slide mounted for movement in the cavity and including a circular aperture therethrough, whereby, in a first location of the slide, the first inlet opening is in fluid communication through the aperture with the first outlet opening but is not in fluid communication with the second outlet opening; and, in a second location of the slide, the first inlet opening is in fluid communication through the aperture with the second outlet opening but is not in fluid communication with the first outlet opening;

g) sealing means for sealing the aperture and the adjacent planar walls; and

h) movement means selectively to move the slide between the first and the second locations, whereby movement of the slide selectively delivers fluid from the first inlet port to the outlet ports.

Such a low restriction directional fluid control valve can be made inexpensively, have a low internal fluid loss, be reliable and can be operated at lower pressures than valves previously proposed.

The valve preferably incorporates a pair of opposed movable plungers which are in contact with the slide and move it between the first and second locations. The plungers are moved in response to fluid pressure supplied by a solenoid actuated pilot control valve incorporated in the body of the valve.

Advantageously, mounted in the aperture of the slide is a compound expandable seal. The seal prevents air loss between the aperture and the adjacent planar side walls of the cavity. The seal includes upper and lower o-rings. Sandwiched between the o-rings is a resilient inner member having angled leg portions. As pressure is applied to the aperture, the leg portions diverge and compress the o-rings applying sealing force which varies with the pressure in the aperture.

To change the condition of the valve beginning with the slide in the first location, fluid pressure from inside the aperture is diverted through the pilot control valve to a plunger. The plunger moves the slide laterally toward the second location. As the pilot valve operates to begin moving the slide, the pressure inside the aperture is relieved for an instant which reduces sealing force against the side walls. This helps the slide to move more readily toward the second location. As the slide begins moving toward the second location, fluid pressure in the aperture recovers rapidly. Once the slide is in the second location, the fluid delivered to the aperture is transmitted to the second outlet opening. Fluid is discharged from the valve at the second outlet port and is transmitted to a device to which the port is connected. As back pressure at the second outlet port builds, the pressure rises inside the aperture. This causes the expandable sealing member to apply further sealing force against the planar side walls to avoid fluid loss.

In the second slide location, any fluid which is returned to the valve at the first outlet opening travels through the cavity on the outside of the slide and is exhausted through an exhaust port of the valve.

When it is desired to change the condition of the valve, the pilot control valve applies fluid pressure to an opposed plunger to shift the slide back to the first location. Once this slide is in the first location, fluid from the inlet port is delivered to the first outlet port and fluid returning to the valve at the second outlet port is exhausted from the valve body.

The invention is diagrammatically illustrated by way of example in the accompanying drawings, in which:-

Figure 1 is a cut away side view of an embodiment of a low restriction fluid directing valve according to the invention;

Figure 2 is a cut away top view of the valve of Figure 1;

Figure 3 is a top view of a slide of the valve of Figure 1;

Figure 4 is a lateral side view of the slide of Figure 3;

Figure 5 is a longitudinal side view of the slide of Figure 3;

Figure 6 is a lateral side cross sectional view of the slide of Figure 3;

Figure 7 is a lateral side cross sectional view of the slide of Figure 3 and an aperture seal of a valve according to the invention; and

Figure 8 is a cross sectional view of an inner seal member of the aperture seal of Figure 7.

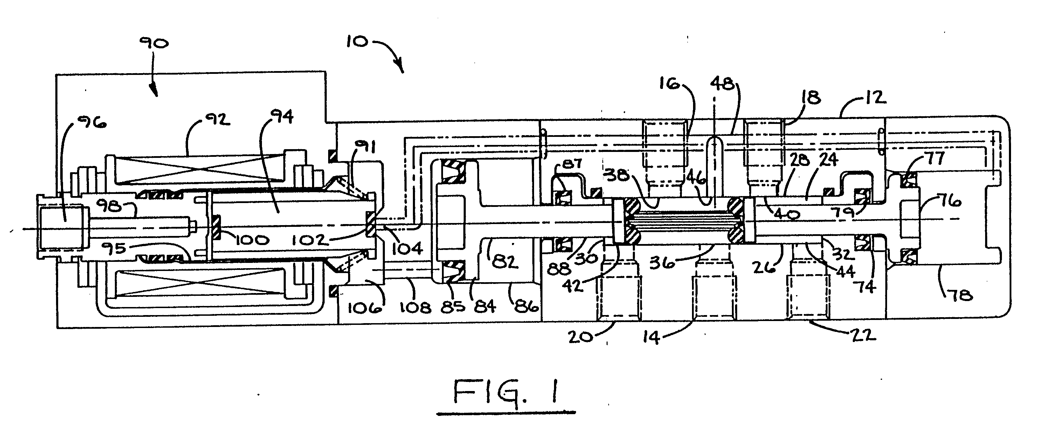

Referring to the drawings and firstly to Figure 1, a valve 10 has a body 12 which includes a first inlet port 14 to accept a fluid line such as a compressed air line. The body 12 also includes a first outlet port 16 and a second outlet port 18. The outlet ports 16 and 18 are intended to be connected to a conventional pneumatic actuator device such as a pneumatic cylinder. The body 12 also includes a first exhaust port 20 and a second exhaust port 22. As later explained, the exhaust ports allow fluid which is returned from the pneumatic device to be exhausted through the valve.

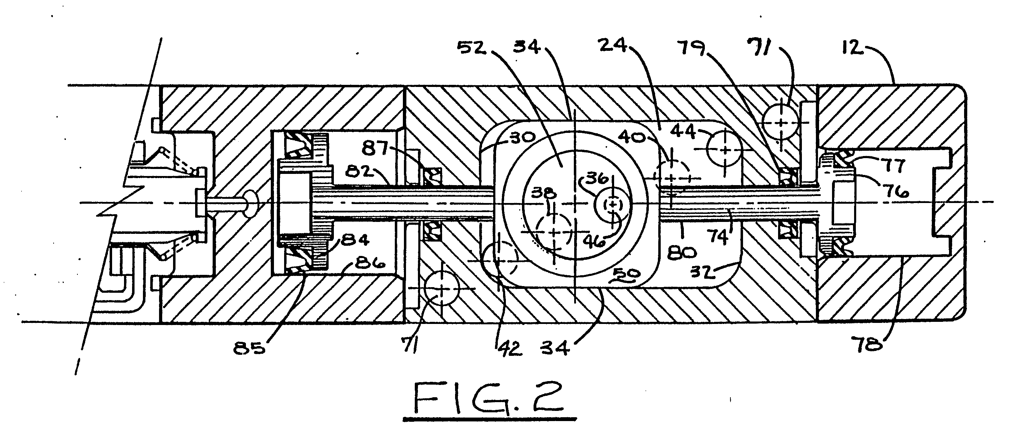

A flat rectangular cavity 24 (Figure 2) is enclosed within the body 12 and is bounded vertically by first and second planar side walls 26 and 28 respectively. The cavity 24 is bounded laterally by first and second cavity end walls 30 and 32. The cavity 24 is also bounded by side walls 34 which extend between the end walls.

The inlet port 14 is in fluid connection with a first inlet opening 36 in the first side wall 26. The first inlet opening 36 is a circular opening through which fluid enters the cavity 24 from the inlet port 14. A first outlet opening 38 is in fluid connection with the cavity 24 and with the first outlet port 16. A second outlet opening 40 extends through the second planar side wall 28 and is in fluid connection with the second outlet port 18. The inlet and outlet ports have a straight through relationship with the internal cavity to reduce flow resistance.

A first exhaust outlet opening 42 extends through the first planar side wall 26 and is in fluid connection with the first exhaust port 20. A second exhaust outlet opening 44 extends through the first planar side wall 26 and is in fluid connection with the second exhaust port 22.

A manifold inlet opening 46 extends through the second planar side wall 28 and is in fluid connection with a manifold line 48 which is used to control the condition of the valve as later explained. The manifold opening 46 is positioned centrally in the valve body above the inlet opening 36.

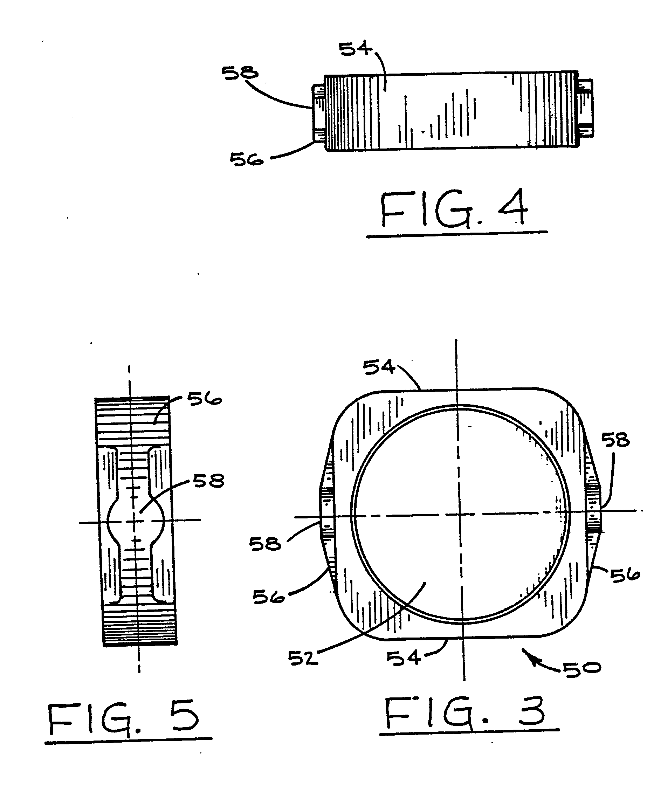

A rectangular slide 50 is mounted for movement within the cavity 24. As shown in Figures 2 to 6, the slide 50 includes a circular aperture 52 which extends all the way through the slide. The slide 50 is bounded at its exterior by a pair of parallel side walls 54 which are sized to fit within the cavity side walls 34 with sufficient clearance to allow the slide 50 to move therein. The slide 50 also includes a pair of opposed end walls 56. The end walls 56 incorporate a pair of circular projections 58 the purpose of which is later explained.

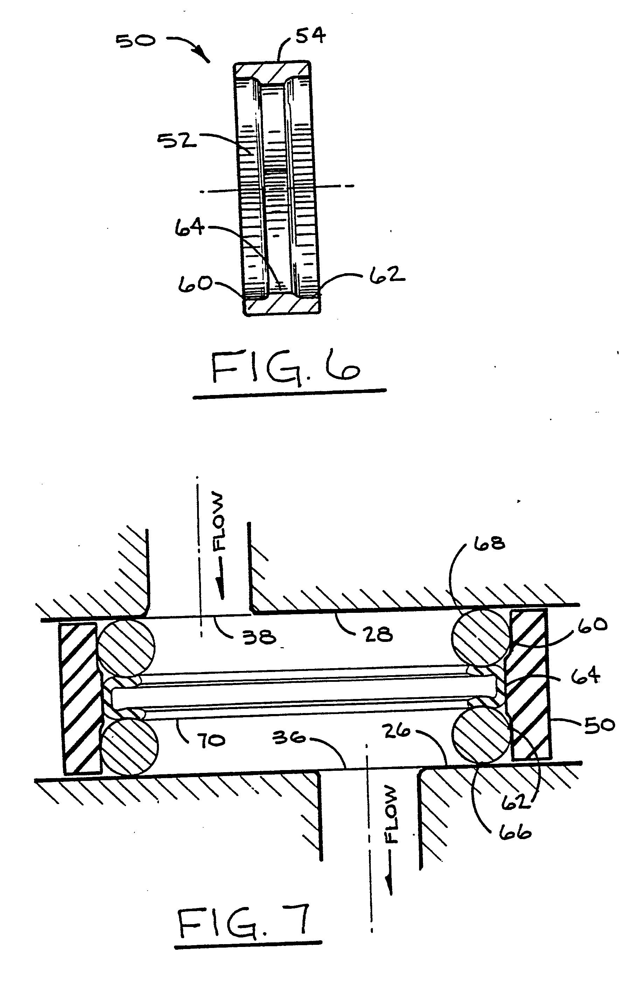

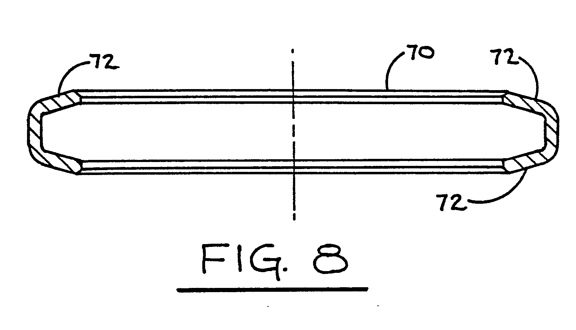

The slide 50 is shown in cross section in Figure 6 and the aperture 52 is shown to include a pair of recessed portions 60 and 62 adjacent the outer faces of the slide. The slide also has an indented area 64 at a middle portion of the aperture. The recessed portion 62 serves as a seat for a first resilient o-ring 66 (Figure 7). The recessed portion 60 serves as a seat for a second resilient o-ring 68. Supported on the indented area 64 between the o-rings is a U-shaped resilient seal member 70 (Figure 8). The seal member 70 includes a pair of angled, inwardly extending leg portions 72. The o-rings 68 and 66 and the seal member 70 together form expandable seal means. The expandable seal means seals the aperture 52 and the adjacent planar side walls 26 and 28 which bound the cavity 24.

As best shown in Figure 2, the valve body 12 also houses a first plunger 74 which includes a piston portion 76 which is movable in a cylindrical chamber 78. The chamber 78 is in fluid connection with the manifold line 48. The plunger 74 also has an extended portion 80 which extends through the end wall 32 and into the cavity 24. The extended portion 80 contacts the slide 50 at one of the circular projections 58. The body 12 and the plunger 74 incorporate conventional seal means 77, 79 to prevent fluid from passing between the cavity 78 and the cavity 24.

A second plunger 82 is mounted in the body 12 in an opposed arrangement with the plunger 74. The plunger 82 includes a piston portion 84 which is movable in a cavity 86. The plunger 82 includes an extended portion 88 which extends into the cavity 24 and contacts the slide 50. Conventional seal means 85, 87 are used to prevent the passage of fluid between the cavity 86 and the cavity 24. As shown in Figures 1 and 2, the valve body 12 is made in sections to provide ease of assembly of the internal parts. The body 12 also incorporates two holes which may be used to mount the valve.

A pilot control valve 90 is also housed in the valve body 12, is of conventional construction well known in the art and is actuated by an electrical solenoid 92. The control valve 90 includes a spool 94 which is movable longitudinally in a sleeve 95 in the valve. The spool 94 is moved in response to the condition of the magnetic field produced by the solenoid. The control valve 90 also has a relief outlet 96 which is connected to a pipette 98 inside the valve. The pipette 98 is shown in the open condition in Figure 1. The spool 94 incorporates a seal 100 which blocks the flow of fluid through the pipette 98 when the spool is moved adjacent the pipette. The spool 94 also incorporates a second seal 102 on the end opposite the seal 100. For a first condition of the spool shown in Figure 1, the seal 102 is moved adjacent to and in a blocking relation with a control port 104. The spool 94 is biased toward its first condition by a spring 91. The control port 104 is in fluid connection with the manifold line 48. When the spool 94 is disposed away from the control port 104, the control port is opened to a control chamber 106. The control chamber 106 is also connected to a passageway 108. The passageway 108 connects the control chamber 106 to the cavity 86.

Fundamental advantages of the preferred form of the valve construction shown are simplicity and low flow resistance through the valve. As shown in Figure 2, the first inlet opening 36 and the first outlet opening 38 are arranged to be in fluid connection through the aperture 52 of the slide 50, when the slide is in a first longitudinal location. When the slide is in the first location, the second outlet opening 40 is in fluid communication with the second exhaust opening 44 through the area of cavity 24 on the outside of the slide 50. This allows fluid that is returned to the valve at the second outlet port 18 from a pneumatic cylinder or other device, to be exhausted through the exhaust port 22. In the preferred embodiment of the valve shown in Figure 1, the first location of the slide is the farthest extent of slide travel to the left.

When the slide 50 is shifted in the cavity 24 to a second longitudinal location, to the full extent of its travel to the right, the first inlet opening 36 enters into fluid communication through the aperture 52 with the second outlet opening 40. In the second location of the slide 50, the first outlet opening 38 is outside the aperture 52 and is in fluid communication with the first exhaust opening 42 through the cavity 24 on the outside of the slide 50.

In the operation of the valve, fluid pressure for controlling the position of the slide 50 is drawn from the aperture 52 through the manifold opening 46. The manifold opening 46 due to its central location in the valve, is always in fluid communication with the aperture 52 regardless of the location of the slide.

When the control valve 90 is in the condition shown in Figure 1, the seal 102 blocks the control port 104. With the control port 104 blocked, the pressure in the manifold line 48 is applied to the chamber 78. This pressure forces the first plunger 74 to the left which moves the slide 50 to the first location. When the valve is in the condition shown in Figure 1, air in the cavity 86 which houses the piston 84 of the second plunger 82, is exhausted through the passageway 108 to the control chamber 106. The control chamber 106 is in fluid connection with the pipette 98 and the relief outlet 96 through air passages (not shown) which extend longitudinally through the sleeve 95 on the outside of the spool 94.

When the electrical condition of the solenoid control valve 90, 92 is changed, the spool 94 moves so that the seal 100 blocks the pipette 98. The movement of the spool 94 opens the control port 104 which enables the pressure in the manifold line 48 to enter the control chamber 106, the passageway 108 and the chamber 86. In this condition, the chambers 78 and 86 are both subjected to the pressure in the manifold line 48. However, because the piston 84 of the second plunger 82 has greater surface area than the piston 76 of the first plunger 74, the second plunger 82 develops a greater force and moves the slide 50 to the right. As the slide 50 reaches the second location to the full extent of its travel to the right, fluid is no longer delivered at the first outlet port 16 and is instead delivered at the second outlet port 18. Concurrently, the second outlet port 18 is disconnected from the second exhaust port 22 and the first outlet port 16 is connected to the first exhaust port 20.

The expandable seal construction inside the aperture 52 reduces the amount of shifting force required to move the slide 50 between the first and second locations. This is accomplished by lowering the fluid pressure in the aperture 52 for an instant each time the control valve 90 begins to change its condition. Relieving the pressure in the aperture 52 results in lessening the force applied to the leg portions 72 of the seal member 70. This correspondingly reduces the outward sealing force applied to the o-rings 66 and 68 so that they begin sliding on the side walls 26 and 28 of the cavity 24 more readily. This makes the slide 50 easier to shift. Once the slide 50 begins moving, pressure inside the aperture rises. This results in greater sealing force being applied between the o-rings and the side walls. To prevent damage to the o-rings, the corners of the openings 38 and 40 are radiused to allow the seals to pass over them without catching. The expandable nature of this seal is also a desirable aspect in that it enables the valve to be made with greater tolerances without leakage. In a preferred form the valve body 12 and slide 50 are made of plastics material. The correlation between shifting force and sealing pressure of the aperture enables the valve to shift satisfactorily at low inlet pressures. The preferred form of the seal and valve can also be inexpensive to manufacture. Of course in other embodiments of the valve, other types of sealing arrangements and materials may be used.

## Claims

1. A low restriction fluid directing valve selectively to deliver fluid between ports of the valve, comprising:

a) a body (12) with a first inlet port (14) and a first outlet port (16);

b) a cavity (24) within the body (12) and including first and second opposed planar walls (26, 28);

c) a first inlet opening (36) in the first planar wall (26) in fluid communication with the first inlet port (14);

d) a first outlet opening (38) in the second planar wall (28) in fluid communication with the first outlet port (16);

e) a slide (50) mounted for movement in the cavity (24) and incorporating an aperture (52) extending through the slide (50), whereby, when the slide (50) is in a first location in the cavity (24), the first inlet and the first outlet openings (36, 38) are in communication through the aperture (52);

f) sealing means to seal the aperture (52) and the first inlet and the first outlet openings (36, 38) in fluid tight relationship, the sealing means including at least one first resilient sealing surface (66, 68) in contact with at least one of the planar walls (26, 28), and force application means (70) to apply a sealing force to the sealing surface (66, 68) responsive to fluid pressure in the aperture (52); and

g) movement means (74, 82) to move the slide (50) between the first location and a second location in the cavity (24), wherein the first inlet opening (36) and the first outlet opening (38) are not in fluid communication; whereby moving the slide (50) between the first and second locations selectively enables fluid to be delivered from the first inlet port (14) to the first outlet port (16).

2. A valve according to claim 1, including pressure relief means (46, 48) to reduce fluid pressure in the aperture (52) as the slide (50) is moved between the first and second locations.

3. A valve according to claim 2, wherein the sealing means includes a first resilient seal (66) in contact with the first planar wall (26) and a second resilient seal (68) in contact with the second planar wall (28).

4. A valve according to claim 3, wherein the force application means of the sealing means comprises an expandable member (70) in the aperture (52), the expandable member (70) including at least one leg portion (72) extending inwardly in the aperture (52); the leg portion (72) being deformable in response to pressure in the aperture (52), and being in operative connection with at least one of the resilient seals (66, 68).

5. A valve according to claim 4, wherein the aperture (52) is circular and wherein the first resilient seal (66) is an o-ring.

6. A valve according to claim 5, wherein the second resilient seal (68) is a second resilient o-ring.

7. A valve according to claim 6, wherein the expandable member (70) is positioned between the first and second o-rings (66, 68) in the aperture (52), and the member (70) includes in cross section the resilient angled leg portion (72) in contact with the first o-ring (66) and a second resilient leg portion (72) in contact with the second o-ring (68) whereby fluid pressure in the aperture (52) deflects the leg portions (72, 72) of the expandable member (70) and applies outward sealing pressure to the o-rings (66, 68).

8. A low restriction fluid directing valve selectively to deliver fluid between ports of the valve, comprising:

a) a body (12) including a first inlet port (14), a first outlet port (16) and a second outlet port (18);

b) a cavity (24) within the body (12) and having opposed first and second planar walls (26, 28);

c) a first inlet opening (36) in the first planar wall (26) in fluid communication with the first inlet port (14);

d) a first outlet opening (38) in the second planar wall (28) in fluid communication with the first outlet port (16);

e) a second outlet opening (40) in the second planar wall (28) spaced from the first outlet opening (38), the second outlet opening (40) being in fluid communication with the second outlet port (18);

f) a slide (50) mounted for movement in the cavity (24) and including a circular aperture (52) therethrough, whereby, in a first location of the slide (50), the first inlet opening (36) is in fluid communication through the aperture (52) with the first outlet opening (38) but is not in fluid communication with the second outlet opening (40); and, in a second location of the slide (50), the first inlet opening (36) is in fluid communication through the aperture (52) with the second outlet opening (40) but is not in fluid communication with the first outlet opening (38);

g) sealing means (66, 68) for sealing the aperture (52) and the adjacent planar walls (26, 28); and

h) movement means (74, 82) selectively to move the slide (50) between the first and the second locations, whereby movement of the slide selectively delivers fluid from the first inlet port (16) to the outlet ports (16, 18).

9. A valve according to claim 8, wherein the slide (50) includes first and second lateral surfaces adjacent the first and second planar walls respectively and a first exterior wall surface (56) of the slide generally traverse of the lateral surfaces and wherein the cavity (24) is generally fluid tight, the valve including:

a) a first exhaust port (22) in the valve body (12);

b) a first exhaust opening (44) from the cavity (24), the first exhaust opening (44) being in fluid communication with the first exhaust port (22), whereby, when the slide (50) is in the first location, the first exterior wall surface (56) of the slide is sufficiently spaced from the second outlet opening (40) to enable fluid to pass from the opening (40) to the cavity (24), and fluid delivered to the valve at the second outlet port (18) is enabled to pass through the cavity (24) to the first exhaust port (22).

10. A valve according to claim 9, wherein the first exhaust opening (44) is in the first planar wall (26), and, when the slide is in the first location, the first exterior wall surface (56) of the slide is spaced sufficiently from the first exhaust opening (44) to enable fluid to pass from the cavity (24) to the opening (42).

11. A valve according to claim 10, including:
a second exterior wall surface (56) of the slide generally traverse of the lateral surfaces and opposed to the first exterior wall surface (56), the second exterior wall surface (56) being sufficiently spaced from the first outlet opening (38) when the slide (50) is in the second location to enable fluid to pass from the opening (38) to the cavity (24),

a second exhaust opening (42) in the first planar wall (26), the second exhaust opening (42) being in fluid communication with a second exhaust port (20), the second exterior wall surface (56) of the slide (50) being spaced sufficiently from the second exhaust opening (44), when the slide (50) is in the second location, to enable fluid to pass from the cavity (24) to the opening (44);

whereby fluid delivered to the first outlet port (16) is enabled to pass through the cavity (24) to the second exhaust opening (42) when the slide is in the second location.

12. A valve according to claim 11, including a second exhaust port (20) in fluid communications with the second exhaust opening (42).

13. A valve according to claim 12, wherein the sealing means for the aperture includes a first resilient seal (66) in contact with the first planar wall (26) and a second resilient seal (68) in contact with the second planar wall (28) and force application means (70) to apply a sealing force to the first and the second resilient seals (66, 68) responsive to pressure in the aperture (52).

14. A valve according to claim 13, wherein the force application means of the sealing means comprises an expandable member (70) in the aperture (52), the expandable member including at least one leg portion (72) extending inwardly in the aperture (52), the leg portion (72) being deformable in response to pressure in the aperture and being in operative connection with the first and second resilient seals (66, 68).

15. A valve according to claim 14, wherein the first resilient seal is a first resilient o-ring (66).

16. A valve according to claim 15, wherein the second resilient seal is a second resilient o-ring (68).

17. A valve according to claim 16, wherein the expandable member (70) is positioned between the first and second o-rings (66, 68) in the aperture (52) and the expandable member (70) includes in cross section, the resilient angled leg portion (72) in contact with the first o-ring (66) and a second resilient leg portion (72) in contact with the second o-ring (68) whereby fluid pressure in the aperture deflects the leg portions (72, 72) of expandable member (70) and applies sealing pressure to the o-rings (66, 68).

18. A valve according to claim 17, including pressure relief means (46, 48) to relieve pressure in the aperture (52) as the slide (50) is moved between the first and the second locations.

FIG. 1

EP 0 348 058 A2

FIG. 2

FIG. 4

FIG. 5

FIG. 3

FIG. 6

FIG. 7

72    70    72

72

# FIG. 8